Europäisches Patentamt

European Patent Office

Office européen des brevets

(11) Publication number: **0 364 649 B1**

# EUROPEAN PATENT SPECIFICATION

(45) Date of publication of patent specification :
04.12.91 Bulletin 91/49

(51) Int. Cl.⁵: **B60N 2/00**

(21) Application number: 88850293.7

(22) Date of filing : 06.09.88

(54) A vehicle-seat heating construction.

(43) Date of publication of application :
25.04.90 Bulletin 90/17

(45) Publication of the grant of the patent :
04.12.91 Bulletin 91/49

(84) Designated Contracting States :
BE DE FR GB NL SE

(56) References cited :
DE-U- 7 913 491

(73) Proprietor : Scandmec AB
Box 504
S-565 00 Mullsjö (SE)

(72) Inventor : Duhan, Tommy c/o CIPRO AB
Box 514
S-631 06 Eskilstuna (SE)
Inventor : Svensson Bo
Dammgatan 9
S-782 00 Malung (SE)

(74) Representative : Grønnberg, Erik Bertil et al
H. ALBIHNS PATENTBYRÅ AB P.O. Box 3137
S-103 62 Stockholm (SE)

EP 0 364 649 B1

## Description

The present invention relates to a vehicle-seat heating construction of the kind set forth in the preamble of Claim 1.

It has been normal practice for many years to provide at least the driving seat of an automotive vehicle and often also the front passenger seat of the vehicle, with electric heating elements which improve passenger comfort and which enable a person to seat himself in a vehicle which has been left standing in cold surroundings without danger to his health. An example of such a known seat heater is shown in De-U-7913491. Other examples are SE-B-8200711-3 and SE-B-8200852-5.

In the case of these known heated seat structures, there is incorporated in the upholstery of the sitting part and the back-rest part of the vehicle seat a heating element, which, as a rule has the form of a meandering array of metal wires of suitable resistance such as to produce a satisfactory power output when coupled to the electrical system of the vehicle (now normally a 12V system). The power output is often regulated, or capable of being regulated, so as to prevent the temperature from becoming too high.

The heating element of such seats can be activated through a manually operated switch and, as a rule, through a further switch which is connected in series with the former switch and which detects when a person is sitting in the vehicle seat.

In addition to heating elements in the seating part and the back-rest of the vehicle seat, and the provision of activation and deactivation switches, an electrically heated vehicle seat will normally require some form of temperature control arrangement which includes a heat sensor for controlling the current supply. In this regard, many different systems are known to the art, such as systems incorporating bimetal sensors, relays etc., and such control systems have either been mounted in the actual vehicle seat itself or, for instance, on the instrument panel of the vehicle.

The general object of this invention is to provide a vehicle seat heating construction for vehicles which can be fitted as easily as possible and which further is suitable to practical conditions in a cold climate.

This general object is achieved with a vehicle seat construction of the aforesaid kind having the features set out in the characterizing clause of Claim 1.

Because the temperature sensor, which is thus located in a favorable position, detects temperature directly, it is possible to take into account, in a particularly practical manner, the heat required, not only with regard to the final temperature necessary for the seated vehicle occupant to be comfortably warmed, but also the temperature of the person seated in the seat. A person who enters the vehicle from extremely cold surroundings will have clothes which are both thick and heavily chilled. Consequently, it must be possible to be able to produce initially a very powerful output which is much higher than that subsequently required.

This is achieved in accordance with the invention, by providing the thermostat circuit with two temperature regulators which work in parallel so to say, and each of which is set to a respective temperature value. One of the thermostat circuits has a higher deactivation or switch-off temperature than the other, but operates only once, so that the vehicle seat temperature will first rise to the high temperature level, before the current is switched off. The temperature will then decrease and when it falls beneath the other set temperature level the current will again be switched on, whereafter the current is repeatedly switched off and on, in a conventional manner, so as to control the temperature to the lower of the two preset temperature levels.

Suitable switch-off temperatures for the aforesaid two cases are, e.g., 39°C and 29°C. In this respect it is preferred that the nominal power output of the heating element used is greater than that of prior art constructions, so that the desired temperature is reached quickly, the inventive vehicle-heating construction being such as to enable such high power outputs to be achieved. A suitable power output is 120 Watts per vehicle seat. Because the higher power output is actually only required as an initial or starting output, the heating element may also be incorporated in a two-circuit system, which circuits are initially connected in parallel during the initial heating process and then in series. In this case, the two heating resistor elements may be arranged respectively for the sitting-part and the back-rest part of the vehicle seat. In view of the fact that more power is consumed in the sitting-part of the seat than the back-rest part thereof, it may be expedient to place part of one thermal resistor element in the back-rest part and part in the sitting-part of the seat, wherein the resistor elements may also be given the same resistance value.

The higher starting temperature may also be reached with the aid of a time circuit, wherein during the starting process full power is permitted to prevail for a predetermined time period or for a time period which is determined by the temperature of the vehicle seat at the time of starting the heating process, and the temperature is subsequently controlled at a comfortable level when this time period has lapsed.

In this respect it is preferred to make the high power function contingent on the starting temperature, in view of the fact that the vehicle seat is not necessarily cold at the time of starting the seat-heating process, but that the heating process is initiated due to the fact that the driver, for instance, has left the vehicle temporarily and has then returned to the vehicle, in which case it is unnecessary to subject the driver to excessive temperatures.

This advantage is afforded by the provision of two separate control circuits which are constructed for deactivation at mutually different temperatures and which have mutually different "hysteresis actions". For example, the first circuit may be constructed so as to be activated at 19°C and deactivated at 39°C, whereas the other circuit is constructed for activation at 27°C and deactivation at 31°C. Thus, the first mentioned circuit, which is effective in heating the vehicle seat initially, will only begin to generate heat when the temperature of the sitting-part of the vehicle seat is beneath 19°C, which means that the temporary absence of the driver from his seat will not result in the initiation of a new starting sequence as soon as he reseats himself. The desired effect is achieved, because the activation and deactivation temperatures of the first control circuit form a temperature range of which the temperature range between the activation and deactivation temperatures of the second control circuit form a minor part, and because the circuit activation signals are added with logic AND-operation to the current controlling element, and also because at least the first control circuit is constructed so as not to be activated at temperatures within its individual hysteresis interval when it is made current conducting, by seat pressure contact.

According to the embodiments of the invention, it is also an object to provide a vehicle seat heating construction which can be fitted as easily as possible and with which the control components can be combined together with the actual heating element itself to the best extent possible, so as to form a composite component which need only be coupled to the battery voltage of the vehicle in order to be heat-controlling. A related object is to provide such a composite component which can be fitted into a vehicle seat during the manufacture thereof and which will continue to function satisfactorily despite the repeated strain to which the vehicle seat is subjected as people climb into and out of the seat, shift position in the seat, or when children climb and jump on the seat, etc. Such further objects may be attained when the invention is realized according to further embodiments thereof.

The invention will now be described with reference to non-limiting exemplifying embodiments illustrated in the accompanying drawings.

Figure 1 is a schematic illustration of av vehicle seat.

Figure 2 illustrates a component with integrated heating element, sensor and control means.

Figure 3 is a detailed view of components according to Figure 2.

Figure 4 is a circuit diagram.

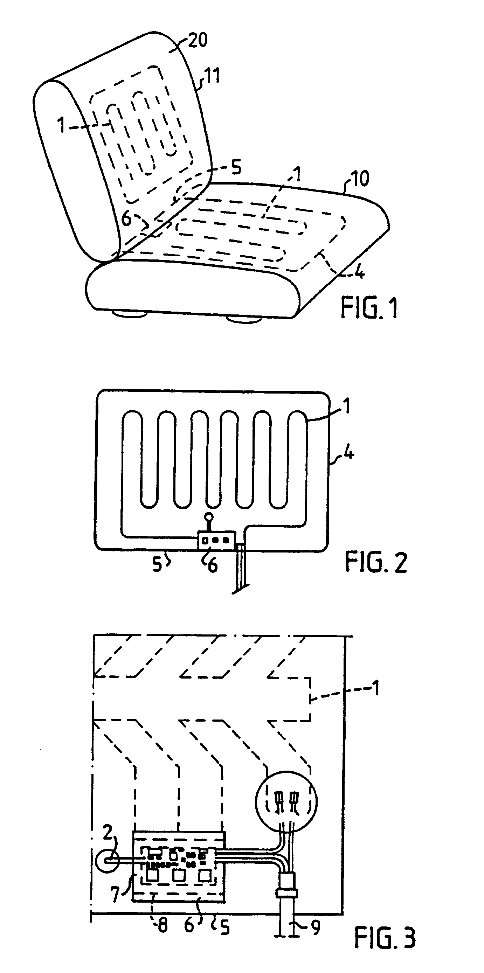

Figure 1 illustrates schematically a vehicle seat comprising a sitting-part 10 and a back-rest 11. The sitting-part 10 extends beneath the upholstery of the back-rest in a quite conventional manner. Heating elements illustrated schematically at 1 are placed beneath the coverings of both the sitting part 10 and the back-rest 11 of the vehicle seat. As is conventional in such constructions, the heating elements include wire loops laid in a meandering pattern and attached to a support, e.g. made of polyether foam, said elements being fitted to respective vehicle seats during their manufacture. The heating elements or plates are normally in the form of laminates comprising a covering of fabric or like material on mutually opposite sides of a thin sheet of foamed plastic, the resistance wires being placed beneath the fabric covering on the upwardly facing side.

In the case of the present inventive arrangement, substantially all control devices 6 are located at the one edge 5 of the heating plate 4, such as to be protected by the lower edge part of the back-rest 11, as shown in Figure 1 and Figure 2.

It will be seen from the part view of Figure 3 that the control device 6, here on a small circuit board or card (22 × 44 mm) with surface mounted components, is placed at the edge 5, with the sensor 2, an NTC-resistor, located on one side, close to a resistance wire and attached by means of a heat melt adhesive. A current supply cable 9 has three conductors, which enables a connection to be established with the electric current-source of the vehicle and also with the heating element 20 of the back-rest 11 (Figure 1), such that the same control members will control the supply of current thereto. The circuit card, or board, is placed in a fabric pocket 7 sewn with the aid of seams 8.

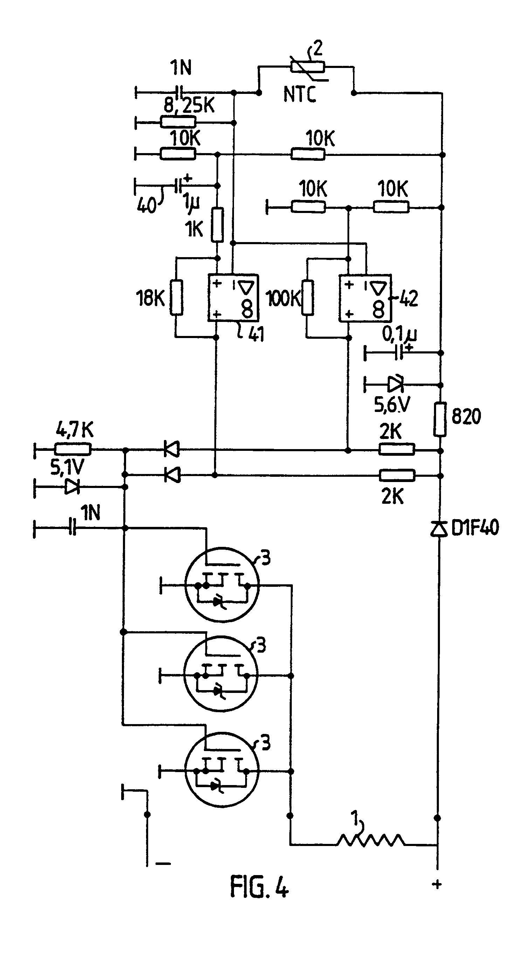

Figure 4 illustrates the construction of the electric circuit. The electric heating element 1 illustrated in Figure 4 may also include the electric heating element 20 of the back-rest, shown in Figure 1, and may be connected either in series or in parallel (not shown). The positive and negative terminals of the circuit are connected to the electric current supply source of the vehicle via electric switches not snown, e.g. a manually operated switch having connected in series therewith a switch which is operated by the load on the vehicle seat concerned.

The current control element comprises three MOSFET-devices 3 which are connected in parallel and which enable a heating current of 10A to be generated at 12V. In the present case there is used NTD 3055 EL (Motorola). The temperature sensor 2 is an NTC-resistor (Philips 232264063103) with $R_{25} = 10$ kohm. Two comparators of the type LM 2903 (Texas) detect on their respective memory inputs the voltage prevailing in a voltage divider of which the sensor 2 forms part. Each of the positive inputs of the comparators is connected to a respective voltage divider. The outputs of the comparators are connected back to the positive inputs via resistors, whereby respective activation and deactivation temperatures are determined. In this regard, particular notice can be paid to the electrolytic capacitor 40 of 1 uF, which is connected between earth and the voltage dividing point for the positive input of the comparator 41. In addition to eliminating disturbing effects on the comparator input in this way, it is ensured that when the supply voltage is applied, the positive input will initially have a lower voltage than the negative input connected to the sensor, so that the comparator will not then become active. A prerequisite in this respect is namely that the sensor voltage is lower than the voltage on the positive input. When a stable state is subsequently reached, the comparator 41 will only produce an output signal if the value of the NTC-resistor is sufficiently high, in this case corresponding to a temperature of beneath 19°C.

As will be understood by those skilled in this art, the voltages on respective positive inputs are not determined solely by the values prevailing in the voltage dividers, but also by the values of the feedback resistors and also by respective resistances (2 kohm) through which the outputs are connected to the terminal voltage, and also as to whether the respective comparator circuits produce high or low output signals, which results in an explosive change and therewith the desired hysteresis and the separate activation and deactivation voltages respectively. Each of the comparators is able to render the MOSFET-devices 3 conductive when high output signals are produced.

In the case of the values recited in the above described circuit, the comparator 41 is activated, i.e. switched on, at a temperature of 19°C and is deactivated, i.e. switched off, at a temperature of 39°C. The comparator 42 is activated at a temperature of 27°C and is deactivated at a temperature of 31°C.

Consequently, activation at a temperature beneath 19°C will cause the resistance value of the NTC-resistor to be sufficiently high for the voltage of the negative input of comparator 41 to lie beneath the voltage on its positive input, such that the comparator receives a high output signal. The voltage on the positive input is thus elevated, and consequently it is necessary for the voltage on the memory input to increase further in order for deactivation to take place, more specifically corresponding to the temperature 39°C on the NTC-resistor.

The comparator 42 operates in a corresponding manner. The skilled person who is capable of reading the circuit diagram will realize at once that the voltage supply to the respective comparators 41 and 42 has not been shown for the sake of clarity.

## Claims

1. A vehicle seat heating construction comprising an electric heating element (1) which is intended for heating a vehicle seat consisting of a sitting-part (10) and a backrest part (11), and which is mounted in the upholstery thereof, and further comprising a temperature responsive sensor (2) having connected thereto a control device which includes a current control element (3) connected in series with the heating element (1), at least a part of the heating element being arranged in a flat element-carrier (4) which is mounted in the vehicle seat and a substantial part of which is included in the sitting-part of said seat, characterized in that the control device has two control circuits (41, 42) with inputs connected to the temperature responsive sensor and their outputs connected to the current control element, wherein a first (41) of the control circuits is constructed to initiate heating of the vehicle seat to a first high temperature, whereas a second (42) of said control circuits is constructed to thereafter adjust the temperature to a second, lower temperature level.

2. A vehicle seat heating construction according to Claim 1, characterized in that the first control circuit (41) has a first activation temperature level and first deactivation temperature level, whereas the second control circuit (42) has a second activation temperature level and a second deactivation temperature level, at which respective temperature levels the two control circuits respectively begin to send and cease to send opening signals to said current control element, the first deactivating temperature level being higher than the second deactivating temperature level, and the second activating temperature level being higher than the first activating temperature level.

3. A vehicle seat heating construction according to Claim 2, in which the temperature responsive sensor is an NTC-resistor (2) in a voltage divider network connected to a circuit supply voltage, and in that each of the first and second control circuits includes a respective comparator circuit (41, 42) and the division point of the voltage divider network is connected to first inputs of said respective comparators and respective second inputs of a voltage divider, characterized in that the second input of the comparator circuit of the first control circuit is also connected to one terminal of a capacitor (40) whose other terminal is coupled to a connection to the supply voltage driving the control circuit.

4. A vehicle seat heating construction according to any one of the preceding claims, characterized in that one edge (5) of said element-carrier extends adjacent a seat part which is overlapped by the backrest; and in that said control device (6) is arranged integrally in said element carrier close to the back-rest and protected by the back-rest from mechanical stresses.

5. A vehicle seat heating construction according to Claim 4, characterized in that the control device is constructed as a single component, which is mounted close to said element-carrier and within the peripheral confines thereof.

6. A vehicle seat heating construction according to Claim 5, characterized in that the single component control device is placed in a pocket (7) sewn on the element carrier.

7. A vehicle seat heating construction according to any of the preceding claims, characterized in that the temperature responsive sensor is connected to supply wires extending from the control device and has its active part located adjacent a part of the vehicle seat which is included in the sitting-part of said seat.

**Patentansprüche**

1. Sitzheizungskonstruktion eines Fahrzeugs, die ein elektrisches Heizelement (1) umfaßt, um einen Fahrzeugsitz zu heizen, der aus einem Sitzteil (10) und einem Rückenlehnenteil (11) besteht, und welche in dessen Polsterung eingesetzt ist und ferner einen temperaturempfindlichen Sensor (2) umfaßt, der mit einer Regeleinheit (6) verbunden ist, die ein Stromregelelement (3) beinhaltet, das in Reihe mit dem Heizelement (1) geschaltet ist, wobei zumindest ein Teil des Heizelements (1) in einem flachen Elementträger (4) angeordnet ist, welcher in den Fahrzeugsitz eingesetzt ist, und ein wesentlicher Teil dessen im Sitzteil (10) des Sitzes beinhaltet ist, **dadurch gekennzeichnet,** daß die Regeleinheit (6) zwei Regelkreise (41, 42) mit Eingängen aufweist, die mit dem temperaturempfindlichen Sensor (2) verbunden sind, und deren Ausgänge mit dem Stromregelelement (3) verbunden sind, wobei ein erster Regelkreis (41) konstruiert ist, um ein Heizen des Fahrzeugsitzes auf eine erste hohe Temperatur einzuleiten, wohingegen ein zweiter Regelkreis (42) konstruiert ist, um danach die Temperatur auf ein zweites, niedrigeres Temperaturniveau einzustellen.

2. Sitzheizungskonstruktion eines Fahrzeugs nach Anspruch 1, **dadurch gekennzeichnet,** daß der erste Regelkreis (41) ein erstes Einschalttemperaturniveau und ein erstes Ausschalttemperaturniveau hat, wohingegen der zweite Regelkreis (42) ein zweites Einschalttemperaturniveau und ein zweites Ausschalttemperaturniveau hat,

— bei den entsprechenden Temperaturniveaus die zwei Regelkreise (41, 42) beginnen bzw. aufhören, Öffnungssignale zum Stromregelelement (3) zu senden,

— das erste Ausschalttemperaturniveau höher als das zweite Ausschalttemperaturniveau und das zweite Einschalttemperaturniveau höher als das erste Einschalttemperaturniveau ist.

3. Sitzheizungskonstruktion eines Fahrzeugs nach Anspruch 2, in welcher der temperaturempfindliche Sensor (2) ein NTC-Widerstand in einer Spannungsteilerschaltung ist, die mit einer Stromkreisversorgungsspannung verbunden ist, und in der jeder der ersten (41) und zweiten (42) Regelkreise einen entsprechenden Komparatorstromkreis beinhaltet, und der Verzweigungspunkt des Spannungsteilernetzwerkes mit ersten Eingängen der entsprechenden Komparatoren und entsprechenden zweiten Eingängen eines Spannungsteilers verbunden ist, **dadurch gekennzeichnet,** daß der zweite Eingang des Komparatorstromkreises des ersten Regelkreises (41) ebenfalls mit einem Anschluß des Kondensators (40) verbunden ist, und dessen anderer Anschluß mit einer Verbindung zu der Versorgungsspannung gekoppelt ist, die den Regelkreis betreibt.

4. Sitzheizungskonstruktion eines Fahrzeugs nach einem der vorangehenden Ansprüche, **dadurch gekennzeichnet,** daß

— sich ein Rand (5) des Elementträgers (4) angrenzend an einen Sitzteil (10) erstreckt, welcher von der Rückenlehne (11) überlappt wird ;
— die Regeleinheit (6) nahe der Rückenlehne (11) in den Elementträger (4) integriert angeordnet ist und durch die Rückenlehne (11) vor mechanischer Beanspruchung geschützt wird.

5. Sitzheizungskonstruktion eines Fahrzeugs nach Anspruch 4, **dadurch gekennzeichnet,** daß die Regeleinheit (6) als ein einzelnes Bauteil konstruiert ist, welches dicht an dem Elementträger (4) und innerhalb dessen äußerer Grenzen angebracht ist.

6. Sitzheizungskonstruktion eines Fahrzeugs nach Anspruch 5, **dadurch gekennzeichnet,** daß das einzelne Regeleinheit-Bauteil (6) in einer auf den Elementträger (4) genähten Tasche (7) plaziert ist.

7. Sitzheizungskonstruktion eines Fahrzeugs nach einem der vorangehenden Ansprüche, **dadurch gekennzeichnet,** daß der temperaturempfindliche Sensor (2) mit einer Versorgungsleitung verbunden ist, die sich von der Regeleinheit (6) erstreckt und sein aktiver Teil angrenzend an einem Teil des Fahrzeugsitzes angebracht ist, welcher in dem Sitzteil (10) des Sitzes enthalten ist.

**Revendications**

1. Dispositif de chauffage pour siège de véhicule, comprenant un élément électrique chauffant (1), qui est destiné à chauffer un siège de véhicule composé d'une assise (10) et d'un dossier (11), et qui est monté dans le rembourrage du siège, le dispositif comprenant en outre un capteur (2) sensible à la température, auquel est relié un dispositif de commande qui comporte un élément de commande de courant (3) connecté en série avec l'élément chauffant (1), au moins une partie de l'élément chauffant étant agencée dans un porte-élément plat (4), qui est monté dans le siège du véhicule et dont une partie substantielle est incluse dans l'assise dudit siège, caractérisé en ce que le dispositif de commande possède deux circuits de commande (41, 42) ayant des entrées reliées au capteur sensible à la température et des sorties reliées à l'élément de commande de courant, un premier (41) des deux circuits de commande étant construit pour commencer le chauffage du véhicule à une première température élevée, tandis que le second circuit de commande (42) est construit pour ajuster ensuite la température à un second niveau de température plus bas.

2. Dispositif de chauffage pour siège de véhicule selon la revendication 1, caractérisé en ce que le premier circuit de commande (41) possède un premier niveau de température d'activation et un premier niveau de température de désactivation, tandis que le second circuit de commande (42) possède un second niveau de température d'activation et un second niveau de température de désactivation, et en ce qu'aux niveaux respectifs de température les deux circuits de commande commencent à envoyer et cessent d'envoyer, respectivement, des signaux d'ouverture auxdits éléments de commande de courant, le premier niveau de température de désactivation étant plus élevé que le second niveau de température de désactivation, et le second niveau de température d'activation étant plus élevé que le premier niveau de température d'activation.

3. Dispositif de chauffage pour siège de véhicule selon la revendication 2, dans lequel le capteur sensible à la température est une résistance (2) à coefficient de température négatif montée dans un réseau diviseur de tension connecté à un circuit d'alimentation en tension, et dans lequel chacun des premier et second circuits de commande comporte un circuit comparateur respectif (41, 42) et la prise intermédiaire du réseau diviseur de tension est connectée à des premières entrées desdits comparateurs respectifs, et des secondes entrées respectives desdits comparateurs sont connectées à une prise intermédiaire d'un diviseur de tension respectif, caractérisé en ce que la seconde entrée du circuit comparateur du premier circuit de commande est également connectée à une borne d'un condensateur (40) dont l'autre borne est couplée à une connection à la tension d'alimentation qui pilote le circuit de commande.

4. Dispositif de chauffage pour siège de véhicule selon l'une quelconque des revendications précédentes, caractérisé en ce qu'un bord (5) dudit porte-élément s'étend à côté d'une partie du siège qui est recouverte partiellement par le dossier, et en ce que ledit dispositif de commande (6) est agencé intégralement dans le porte-élément, près du dossier, et mis à l'abri des contraintes mécaniques par ledit dossier.

5. Dispositif de chauffage pour siège de véhicule selon la revendication 4, caractérisé en ce que le dispositif de commande est construit sous la forme d'un composant unique, qui est monté près dudit porte-élément et à l'intérieur du périmètre de celui-ci.

6. Dispositif de chauffage pour siège de véhicule selon la revendication 5, caractérisé en ce que le dispositif de commande à composant unique est placé dans une poche (7) cousue sur le porte-élément.

7. Dispositif de chauffage pour siège de véhicule selon l'une quelconque des revendications précédentes, caractérisé en ce que le capteur sensible à la température est connecté à des fils d'alimentation qui sortent du dispositif de commande, et sa partie active est située près d'une partie du siège du véhicule qui est incluse dans l'assise dudit siège.

FIG. 1

FIG. 2

FIG. 3

FIG. 4